# EUROPEAN PATENT APPLICATION

(11) **EP 4 625 197 A1**
(43) Date of publication of application: **01.10.2025**
(21) Application number: 24166944.9
(22) Date of filing: 27.03.2024
(51) Int. Cl.: G06F 16/215

(54) **ADAPTIVE DATA CURATION**

(71) Applicant: INTEL Corporation, Santa Clara, CA 95054 (US)
(72) Inventor: PALERMO, Stephen, Chandler, AZ 85226 (US); GUIM BERNAT, Francesc, 08036 Barcelona (ES); BROWNE, John J., Limerick, V94 C44N (IE); POORNACHANDRAN, Rajesh, Portland, OR 97229 (US); CARRANZA, Marcos E., Portland, OR 97229 (US)
(74) Representative: Viering, Jentschura & Partner mbB Patent- und Rechtsanwälte

(57) **Abstract**

Disclosed herein are systems, devices, and apparatuses for adaptive data curation. The adaptive data curation system may include a processor configured to receive sensor data about a vehicle, wherein the sensor data is associated with a characteristic label that indicates a collection characteristic about the sensor data. The adaptive data curation system determines based on the characteristic label a processing location of a processing device for processing the sensor data, wherein the processing location is associated with a processing capability of processing the sensor data. The adaptive data curation system routes the sensor data and its characteristic label to the processing device to process the sensor data with the processing capability into an enriched dataset.

## Description

### Technical Field

The disclosure relates generally to data collection and curation, and in particular, to automatic data curation functions that may be intermediately located between the sensor itself and the ultimate data repository for sensor data that may be collected by vehicles, robots, and other environmental-, roadway-, and infrastructure-related systems.

### Background

As robots, autonomous vehicles, mobile devices, etc. become increasingly prevalent, the amount of data collected by these types of devices becomes dauntingly vast. On the one hand, such devices benefit from large amounts of data in order to improve navigation, perception, safety, localization, etc., especially with respect to moving vehicles that must navigate (sometimes autonomously) by taking into account their surroundings, other people, other vehicles, etc. On the other hand, it becomes problematic to deal with the enormous volume of data that may be produced by such devices. For example, it is estimated that an autonomous vehicle may collect 0.3 TB to 19 TB of data per hour-that means multiple petabytes per day for a single vehicle. Sensors such as radar, cameras, Light Detection and Ranging (LiDAR) sensors, inertial sensors, ultrasonic sensors, etc. are becoming cheaper and thus more prevalent on all types of traffic-related devices. But curating, processing, and managing all of this data may put an undo burden on computing and storage systems, and as technologies continue to evolve, even larger volumes of data may be generated, where such data is the currency of decision-making for vehicles, robots, and other such devices.

### Brief Description of the Drawings

In the drawings, like reference characters generally refer to the same parts throughout the different views. The drawings are not necessarily to scale, emphasis instead generally being placed upon illustrating the exemplary principles of the disclosure. In the following description, various exemplary aspects of the disclosure are described with reference to the following drawings, in which:
FIG. 1 shows an example adaptive data curation system for managing processing of sensor data into an enriched dataset;
FIG. 2 illustrates an example adaptive data curation system for managing processing of sensor data into an enriched dataset;
FIG. 3 illustrates an exemplary schematic drawing of an adaptive data curation system that may manage processing of sensor data into an enriched dataset; and
FIG. 4 depicts an exemplary schematic flow diagram of a method of an adaptive data curation system that may manage processing of sensor data into an enriched dataset.

### Description

The following detailed description refers to the accompanying drawings that show, by way of illustration, exemplary details and features.

The word "exemplary" is used herein to mean "serving as an example, instance, or illustration". Any aspect or design described herein as "exemplary" is not necessarily to be construed as preferred or advantageous over other aspects or designs.

Throughout the drawings, it should be noted that like reference numbers are used to depict the same or similar elements, features, and structures, unless otherwise noted.

The phrase "at least one" and "one or more" may be understood to include a numerical quantity greater than or equal to one (e.g., one, two, three, four, [...], etc., where "[...]" means that such a series may continue to any higher number). The phrase "at least one of' with regard to a group of elements may be used herein to mean at least one element from the group consisting of the elements. For example, the phrase "at least one of' with regard to a group of elements may be used herein to mean a selection of: one of the listed elements, a plurality of one of the listed elements, a plurality of individual listed elements, or a plurality of a multiple of individual listed elements.

The words "plural" and "multiple" in the description and in the claims expressly refer to a quantity greater than one. Accordingly, any phrases explicitly invoking the aforementioned words (e.g., "plural [elements]", "multiple [elements]") referring to a quantity of elements expressly refers to more than one of the said elements. For instance, the phrase "a plurality" may be understood to include a numerical quantity greater than or equal to two (e.g., two, three, four, five, [...], etc., where "[...]" means that such a series may continue to any higher number).

The phrases "group (of)", "set (of)", "collection (of)", "series (of)", "sequence (of)", "grouping (of)", etc., in the description and in the claims, if any, refer to a quantity equal to or greater than one, i.e., one or more. The terms "proper subset", "reduced subset", and "lesser subset" refer to a subset of a set that is not equal to the set, illustratively, referring to a subset of a set that contains less elements than the set.

The term "data" as used herein may be understood to include information in any suitable analog or digital form, e.g., provided as a file, a portion of a file, a set of files, a signal or stream, a portion of a signal or stream, a set of signals or streams, and the like. Further, the term "data" may also be used to mean a reference to information, e.g., in form of a pointer. The term "data", however, is not limited to the aforementioned examples and may take various forms and represent any information as understood in the art.

The terms "processor" or "controller" as, for example, used herein may be understood as any kind of technological entity that allows handling of data. The data may be handled according to one or more specific functions executed by the processor or controller. Further, a processor or controller as used herein may be understood as any kind of circuit, e.g., any kind of analog or digital circuit. A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

As used herein, "memory" is understood as a computer-readable medium (e.g., a non-transitory computer-readable medium) in which data or information can be stored for retrieval. References to "memory" included herein may thus be understood as referring to volatile or non-volatile memory, including random access memory (RAM), read-only memory (ROM), flash memory, solid-state storage, magnetic tape, hard disk drive, optical drive, 3D XPoint^{™}, among others, or any combination thereof. Registers, shift registers, processor registers, data buffers, among others, are also embraced herein by the term memory. The term "software" refers to any type of executable instruction, including firmware.

Unless explicitly specified, the term "transmit" encompasses both direct (point-to-point) and indirect transmission (via one or more intermediary points). Similarly, the term "receive" encompasses both direct and indirect reception. Furthermore, the terms "transmit," "receive," "communicate," and other similar terms encompass both physical transmission (e.g., the transmission of radio signals) and logical transmission (e.g., the transmission of digital data over a logical software-level connection). For example, a processor or controller may transmit or receive data over a software-level connection with another processor or controller in the form of radio signals, where the physical transmission and reception is handled by radio-layer components such as RF transceivers and antennas, and the logical transmission and reception over the software-level connection is performed by the processors or controllers. The term "communicate" encompasses one or both of transmitting and receiving, i.e., unidirectional or bidirectional communication in one or both of the incoming and outgoing directions. The term "calculate" encompasses both 'direct' calculations via a mathematical expression/formula/relationship and 'indirect' calculations via lookup or hash tables and other array indexing or searching operations.

A "vehicle" may be understood to include any type of machinery that may be operated by software, including autonomous, partially autonomous, stationary, moving, or other objects or entities that utilize software as part of their operation. By way of example, a vehicle may be a driven object with a combustion engine, a reaction engine, an electrically driven object, a hybrid driven object, or a combination thereof. A vehicle may be or may include an automobile, a bus, a mini bus, a van, a truck, a mobile home, a vehicle trailer, a motorcycle, a bicycle, a tricycle, a train locomotive, a train wagon, a robot, a personal transporter, a boat, a ship, a submersible, a submarine, a drone, an aircraft, industrial machinery, autonomous or partially autonomous machinery, or a rocket, among others.

A "robot" may be understood to include any type of digitally controllable machine that is designed to perform a task or tasks. By way of example, a robot may be an autonomous mobile robot (AMR) that may move within an area (e.g., a manufacturing floor, an office building, a warehouse, etc.) to perform a task or tasks; or a robot may be understood as an automated machine with arms, tools, and/or sensors that may perform a task or tasks at a fixed location; or a combination thereof. More generally, "vehicle" and "robot" may be used herein to refer to devices that utilize sensor information about the environment to inform operation of the vehicle/robot with respect to the environment.

Given that vehicles may rely on sensor information for critical operations such as collision avoidance, navigation, safety, route planning, autonomous driving, task implementation, and other activities, the general understanding is that as much data as possible should be collected so that such decisions may be based on a rich set of diverse data in order to arrive at the best decision. While generating a large volume of sensor data may be desired for such decision making, large volumes of data may introduce problems in terms of processing, curating, transferring, storing, and retrieving the data efficiently. Determining what data to process, curate, transfer, and/or store may not be a trivial task because it may be hard to distinguish-especially in real time-between useful data and useless data, between data that will be helpful for decision making and merely noise. It may not be possible to identify the value of a piece of measured data to an extent that is sufficiently conclusive to make inferences about the accuracy of the data at the time it is collected at the source.

Taking camera images and image processing as an example, object detection within a frame of an image may not be accurate based on the single frame alone, where occlusions, lighting, shutter speed (i.e., blurriness), weather, etc., may impact the ability of any single frame to be processed to correctly identify objects. Thus, the data may need to be collected over longer periods of time (e.g., several frames, several days, from several different cameras, angles, vehicles, etc.) and/or fused with other data in order to more reliably process the data to identify objects. For example, light sensor data or weather information may be used to understand how light may be impacting the captured scene-for example, the presence of shadows in a given location at a certain time of day-and then to revise the image processing to account for detecting objects at this time of day in this certain light and with this type of weather. However, the camera itself may not know or understand whether the captured image will be helpful/useful for later processing stages. As a result, it may be important for an intermediate device to look at multiple sources of data together in order to appropriately value a given piece of data for a particular purpose.

As discussed in more detail below, the disclosed adaptive data curation system may be used to help distinguish valuable sensor data from less valuable sensor data, differentiating good data from glitches, good data from detection mistakes, good data from noise, or low value data from good data with high entropy and therefore high value. The disclosed adaptive data curation system may utilize data aggregation hubs (such as edge infrastructure equipment like a roadside unit ("RSU")) to segregate, both spatially and temporally, the data collected by a sensor on a vehicle, robot, or mobile device from the processing, evaluation, and valuation of the collected data. In this sense, the data aggregation hub may operate as an intermediate device that preemptively values, marks, processes, or discards collected data before it is transmitted to and/or stored in a large data repository (e.g., a "data lake") for use by perception systems, detection systems, navigation systems, etc.

Using a vehicle equipped with a camera-based sensor as an example, the vehicle may be collecting images of the area/scene surrounding the vehicle during a heavy rain storm. The image data collected by the camera, even if capable of optical/digital filtering to improve the quality of the collected image data, may not have sufficient additional information about the area/scene to determine the value, quality, or relevance of the captured images for perception tasks or for other uses. However, if the image data is combined with other images or other sensor data from multiple sources (e.g., multiple vehicles), the combined data may provide sufficient context to make a decision as to the value of the particular image data for the particular task. For example, if 8% of the vehicles that drive around a curve at that location experience braking failures in that curve, then it may be valuable to ingest, process, and utilize the images for a predictive braking model. Curating data at an intermediate unit, such as a roadside unit (RSU), that may collect many different types of data from many different sources may provide the appropriate context to assist in categorizing, evaluating, valuing, or determining appropriate processing for the data it collects.

The disclosed adaptive data curation system may have the capability to program a set of metadata that is added by each sensor at the source. For example, images from a vehicle camera may be programmed so that the image is annotated with information about the conditions under which the image was captured, including, for example, the environment, the velocity of the vehicle, the location, the temperature, the lighting, the time, the date, the weather, etc. These may be applied as tags to the image in any type of format that may be accessed by the adaptive data curation system (e.g., via an application programming interface/APIs) in order to leverage noise filtering or to correct mistakes in algorithms that are detected across data collected from a large subset of vehicles, based on the tagged conditions under which the image was captured. In the case of object occlusion in an image, for example, the adaptive data curation system may use additional range data and speed data to assign movement vector metadata to the image dataset, allowing potential occlusion events to be detectable.

The disclosed adaptive data curation system may have the capability to aggregate data from various types of sensors from multiple data sources and then leverage the metadata to make decisions on data curation and accuracy/value of the data for a given task. In this manner, the adaptive data curation system may use a data curation model to determine whether, how, and to what extent the collected data may be processed, stored, transmitted, and/or further labeled. While this type of intermediate data curation may be performed at any location, an RSU may be in a particularly advantageous position because of the RSU's access to an aggregated view of the sensor data across multiple types of sensors across multiple units at different times (e.g., with spatial and/or temporal diversity in the view of the data, indexed by a metadata event).

The disclosed adaptive data curation system may have the capability to provide for a digital data lake that may be distributed across the infrastructure and that may be indexed by the tagged metadata from the sensors. In this manner, the adaptive data curation system may also service queries from historical data from various RSUs as needed.

The disclosed adaptive data curation system may have the capability for the infrastructure to "pass on" insights to nearby vehicles that may come within range of the RSU, especially in cases when the RSU determines there is a pattern in the curated data. For example, the adaptive data curation system may determine that between 5 PM and 7 PM, there are frequently shadows present in images of the bend of a road in a particular location which may causes a vehicle's local object recognition to make common mistakes. Thus, the adaptive data curation system may provide updates to the vehicle's object recognition algorithm or process the images using a more extensive model in order to improve the vehicle's object recognition for this location.

The disclosed adaptive data curation system differentiates itself from currently available data systems in that current systems tend to be localized to the particular sensor data being collected (e.g., at the vehicle). For example, a camera may utilize a local denoising framework for improving the image quality or for providing a noise estimation for the image and thus the quality/usefulness of the image. This may be done with models that return a confidence score for the particular post-processing of the image. For example, in an object detection model, the bounding boxes for an object may include a confidence score associated with how confident the local model is in its object detection, its labeling of the object, its boundaries for the bounding box, etc. But such models do not utilize sensor data from other sources in order to assign a confidence level and they do not have, in contrast to the disclosed adaptive data curation system, a coordinated and adaptive data curation between vehicles (or other devices that collect sensor data) and infrastructure architecture.

The disclosed adaptive data curation system may provide an interface for requesting that data sources (e.g., sensor systems on a vehicle) tag sensor data payloads with metadata that provides useful information that may be used by the infrastructure equipment to perform targeted data curation based not only on the type of data source but also on how the data was collected (e.g. under what conditions the data was collected (e.g., in bright, sunny weather; in heavy rain; in high humidity; while moving at a high speed; etc.)). The disclosed adaptive data curation system may also include an expanded infrastructure that uses the collected metadata to automatically route the sensor data to an appropriate infrastructure processing device for processing and curating the sensor data. For example, the adaptive data curation system may determine, based on the metadata, that the likelihood of errors or need for advanced processing is very small, so the data curation may determine that the processing may be done with a simple algorithm in the RSU. However, if the metadata indicates that a more advanced algorithm may be needed (e.g. a vehicle is capturing images while traveling at high-speeds in heavy rain conditions), the adaptive data curation system may determine that a more advanced algorithm may need to be applied at an off-site data center (e.g., edge computing) that has advanced compute capabilities to handle the more advanced processing.

The disclosed adaptive data curation system may include a distributed data lake to store curated data. The data lake may be accessed by digital twins and other similar resources. The access to the data lake may be indexed based on how the data was generated and under what conditions it was collected. The disclosed adaptive data curation system may determine that certain data sources, for example, are unreliable for the particular purpose. For example, if a front-facing camera generates data with glitches in a consistent manner as compared to other images collected from other vehicles, the adaptive data curation system may mark the image data received from this vehicle as unreliable and notify the vehicle that there may be a problem with its front-facing camera.

The disclosed adaptive data curation system may also include an attestation and validation scheme to verify the trustworthiness of the source of the data. For example, using the metadata tags associated with the sensor data (e.g., a signature block), the adaptive data curation system may determine whether to include, exclude, or mark as "suspect" the received sensor data.

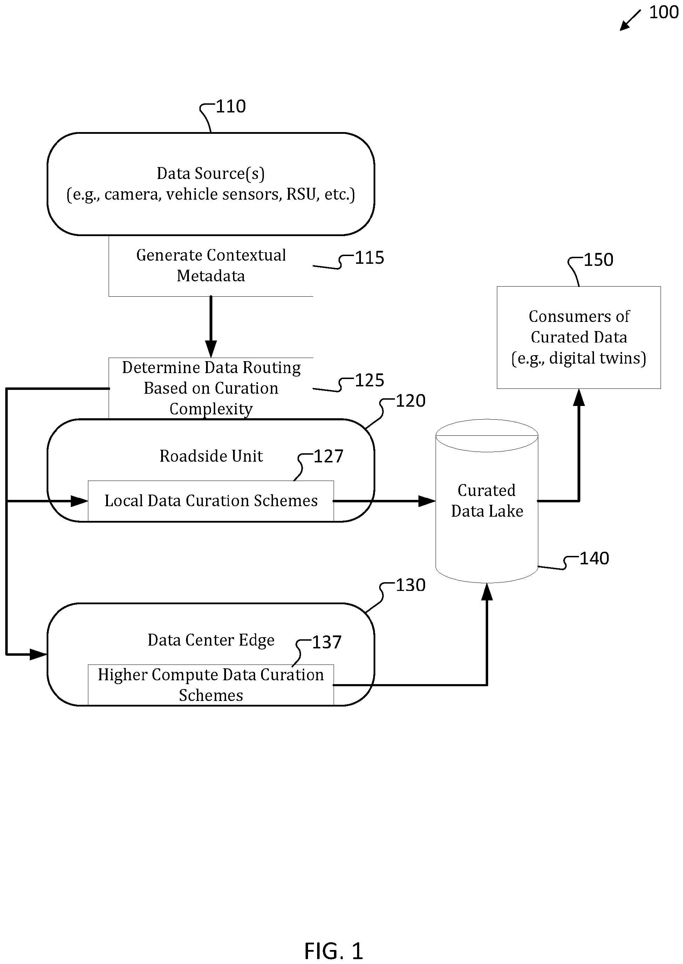

FIG. 1 shows a high-level view of an exemplary adaptive data curation system 100 that may include the features of the disclosed adaptive data curation systems discussed above. A data source 110 may actively collect sensor data (e.g., at a vehicle during its normal operation, on a robot while autonomously navigating through an area, on an infrastructure unit that is collecting images of the road as vehicles pass by, etc.). The adaptive data curation system 100 may include a roadside unit 120 that may evaluate received data (and associated metadata) in order to determine appropriate routing, processing, authentication, etc. for the received data. The adaptive data curation system 100 may also include a data center edge computing resource 130 that is able to provide advanced processing schemes that may require higher computing resources than would be available at data source 110 or at roadside unit 120. The adaptive data curation system 100 also includes a curated data lake 140 that stores the as-processed sensor data as enriched data that may be accessed by consumers 150 of the curated data, such as digital twins. As should be understood, the groups of devices and functions shown in FIG. 1 are merely exemplary and the functions may be allocated to any device and/or distributed across any number devices.

The roadside unit 120 may be understood as an intermediate device that sits between the data source 110 and the curated data lake 140 to authenticate the data, determine a processing algorithm, route the data to an appropriate processing location of a processing device, and/or assess an appropriateness (e.g., a quality) of the data for a particular purpose (e.g., be it navigation, object detection, localization, etc.). The roadside unit 120 may instruct the data source 110 (or the data source 110 may already) to generate contextual metadata that will accompany the sensor data (e.g., a characteristic label or a set of tags) or the roadside unit 120 may apply contextual metadata based on other sensor data inputs. The contextual metadata may include information about the context in which the data was collected (e.g., collection characteristics), including, as examples, information about the environment, information about the velocity of the vehicle, the location, the temperature, the lighting, the time, the date, the weather, etc. at the time the sensor data was collected.

As should be understood, contextual metadata is not limited to these examples, but may include any type of characteristics related to what, where, when, and how the sensor data was collected. The contextual metadata may be general or specific, depending on the available information and level of abstraction desired. Other examples of collection characteristics that may be indicated by a corresponding characteristic label include a physical location of a source of the sensor data at the time the data was captured, a type of the source of the sensor data, a speed of the source of the sensor data at the time the data was captured, a light condition in which the sensor data was captured, a weather condition in which the sensor data was captured, an ambient temperature at the capture time, etc.

Based on the metadata (e.g., the characteristic labels and/or tags that indicate a collection characteristic about the data), the roadside unit 120 may determine a processing location of a processing device for processing the data, a processing algorithm to be used, and/or a processing priority for the data. For example, if the data is an image where the metadata indicates the image was captured during a time of low lighting, the roadside unit 120 may determine that a more complex processing algorithm may be need to fuse together several types of data and images in order to detect objects on the image. The roadside unit 120 may also determine a processing location of a processing device that corresponds to the selected processing algorithm. For example, the roadside unit 120 may not have sufficient computing capability to process the image itself and may route the image to a data center edge computing resource 140 for processing the image according to the selected algorithm. As should be understood, the roadside unit 120 itself may process the image according to the available data curation schemes 127 within the roadside unit 120. Once the image is processed, the adaptive data curation system 100 may then transmit the processed image and associated information as an enriched dataset to the curated data lake 140. The enriched dataset in the curated data lake 140 may be accessed by consumers 150 such as a vehicle systems, for example, that may use the enriched dataset(s) from the curated data lake 140 to control movements of the vehicle, control navigation decisions, control safety measures, make object detection determinations, make localization determinations, etc.

The roadside unit 120 may use the metadata (e.g., the characteristic labels and/or tags) to verify the authenticity of the sensor data. For example, one of the characteristic labels may indicate the origin of the sensor data (e.g., a signature block that identifies the source of the sensor data) and the roadside unit 120 may validate whether the signature block is genuine. If the validation fails (e.g., the signature block is invalid), the roadside unit 120 may disregard the sensor data, delete the sensor data, refuse to further process the sensor data, downgrade a quality metric associated with the sensor data, etc., and determine whether or not to provide the sensor data to the curated data lake 140.

The roadside unit 120 may use the metadata (e.g., the characteristic labels and/or tags) and/or other sensor data available in the curated data lake 140 to determine a quality metric associated with the data. For example, the sensor data may be compared to other sensor data collected in similar circumstances (e.g., with similar characteristic labels that indicate similar collection characteristics) to determine the quality metric and associate the determined quality metric with the sensor data. For example, if the determined quality metric is too low (e.g., fails to meet a predefined criterion), the roadside unit 120 may disregard the data, delete the sensor data, refuse to further process the sensor data, etc., but if the determined quality metric is sufficiently high (e.g., it satisfies a predefined criterion), the roadside unit 120 may provide the sensor data to the curated data lake 140.

To make decisions about the sensor data (e.g., processing algorithms, processing location of a processing device, quality metrics, authenticity, etc.), the roadside unit 120 may utilize a learning model such as a large language model (LLM) that helps relate the sensor data and associated labels to decisions the roadside unit 120 may make with respect to the sensor data. In this manner, the large language model may make inferences as to decisions based on the sensor data. The large language model may use the sensor data (e.g., from numerous situations, vehicles, and sources) or other training data to train the large language model on the inferences that lead to the decisions. The roadside unit 120 may include an interface or interacting with the large language model in order to provide inputs (e.g., sensor data and its associated metadata) in order to arrive at a recommended decision. The large language model may be understood as a generative model that generates intelligent outputs (e.g., recommended decisions) based on a set of inputs (e.g., sensor data and its associated metadata). As should be understood, the large language model may be provided on the roadside unit 120 or may be located on an edge server or cloud-based server that may be accessed by the roadside unit 120 for its generative capabilities.

The roadside unit 120 may include a communication interface for communicating with other vehicles, sensors, other roadside units, the data lake, etc. The communication interface may support any number of wired and/or wireless communication protocols such as cellular, wireless local area networks, near-field communications, vehicle-to-anything (V2X) communication, etc. The communication interface may be a transmitter, receiver, transceiver, etc. to support transmissions to and/or from the roadside unit 120.

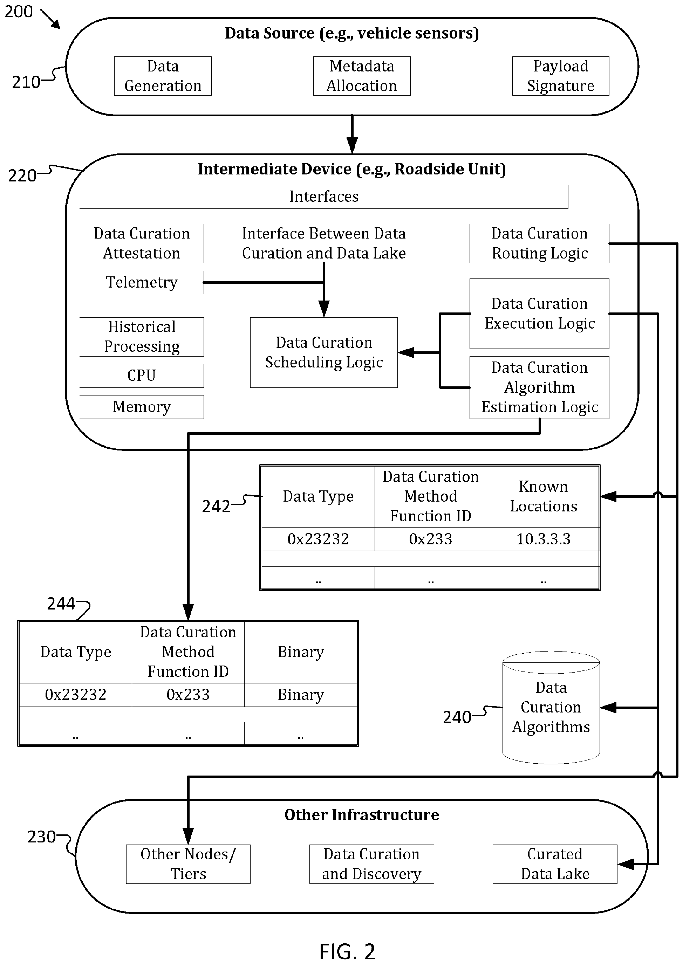

FIG. 2 shows adaptive data curation system 200 that includes a more detailed, exemplary view of the devices and functions that may be supported by the adaptive data curation system 200. Adaptive data curation system 200 may be similar to adaptive data curation system 100, where adaptive data curation system 200 may include a data source 210 that may actively collect sensor data (e.g., at a vehicle during its normal operation, on a robot while autonomously navigating through an area, on an infrastructure unit that is collecting images of the road as vehicles pass by, etc.). Adaptive data curation system 200 may include an intermediate unit 220 (e.g., a roadside unit) that may evaluate received sensor data (and its associated metadata) in order to make decisions (e.g., using an LLM) about appropriate routing, processing, authentication, etc. for the received sensor data; and other infrastructure 230 (e.g., a data center edge computing resource) that is able to provide advanced processing schemes that may require higher computing resources than would otherwise be available at data source 210 or intermediate unit 220. The other infrastructure 230 may also include a curated data lake 240 that stores the as-processed sensor data as enriched data that may be accessed by consumers of the curated data. As should be understood, the groups of devices and functions shown in FIG. 2 are merely exemplary and the functions may be allocated to any device and/or distributed across any number devices.

Data source 210 may be responsible for generating/collecting sensor data from numerous sensors located at the device, applying characteristic labels (e.g., metadata/tags) to the collected sensor data, where the characteristic labels indicate the conditions in which the sensor data was collected. The characteristic labels may also include a payload signature that indicates the source/origin of the sensor data. Other examples of the characteristic labels may include a physical location at the time the sensor data was captured, a type of sensor/device that captured the sensor data, a velocity at which the sensor/device that captured the sensor data was traveling at the time of the capture, the light conditions (e.g., brightness, darkness, light intensity, glare angle, etc.) at the time of the capture, the weather conditions (e.g., sunny, rainy, snowy, foggy, etc.) at the time of the capture, the ambient temperature at the time of the capture, etc.

The data source 210 may communicate with the intermediate unit 220 to transmit the sensor data to the intermediate unit 220 via any number of interfaces (e.g., wireless, wired, etc.) according to any communication protocol (e.g., cellular, V2X, Bluetooth, etc.). The intermediate unit 220 may also instruct the data source 210 on what characteristic labels should be applied to the collected sensor data (e.g., the types of labels/metadata to apply and a data format therefor). The intermediate unit 220 may include a processor (CPU) and memory for executing various algorithms for evaluating, processing, and storing the received sensor data. As should be understood, sensor data may be received from a large number of varying data sources that may be located on many different types of objects (e.g., vehicles, drones, infrastructure equipment, mobile devices, etc.), and the intermediate unit 220 may make decisions about the quality of the data, what processing may be necessary, where the processing should take place, whether/where to eventually store the processed data, etc.

The intermediate unit 220 may include a data curation attestation function that may validate the signature block(s) of the received sensor data to determine whether it is genuine. If the validation fails (e.g., the signature block is invalid), the intermediate unit 220 may disregard the sensor data, delete the sensor data, refuse to further process the sensor data, downgrade a quality metric associated with the sensor data, etc., and determine whether or not to transmit the sensor data to the curated data lake for storage and access by customers.

The intermediate unit 220 may include data curation routing logic that may determine what algorithm should be used to process the sensor data and where the sensor data should be processed. The intermediate unit 220 may tag the sensor data accordingly. For example, the data curation routing logic may utilize a table 242 of sensor data for processing that includes fields for an identifier (ID) of the type of sensor data, an ID for the type of curation/processing algorithm to apply to the sensor data, and a list of locations where the selected curation/processing algorithm is available. Thus, for each item of sensor data that arrives at the intermediate unit 220, it may first validate the data with the attestation function, then determine which type of curation/processing algorithm to apply, and then process the sensor data according to the curation/processing algorithm (if available local) or transmit the sensor data to other nodes/tiers that have the capability to process the sensor data according to the curation/processing algorithm (e.g., at other infrastructure 230).

The intermediate unit 220 may have data curation scheduling logic that is responsible for managing requests that the routing logic determines may be processed locally by the intermediate unit 220 itself. The data curation algorithm estimation logic of the intermediate unit 220 may determine what curation/processing scheme should be performed on each item of sensor data. To identify what type of curation/processing scheme should be used, the data curation algorithm estimation logic may utilize a function (e.g., a binary script or other determination method) that may take into account the type of sensor data and the other metadata/tags associated with the sensor data to determine what type of curation/processing algorithm should be applied. Once the intermediate unit 220 selects the curation/processing algorithm, it is instantiated into a local CPU of the intermediate unit 220, the relevant metadata and sensor data payload are provided along with the selected curation/processing algorithm ID to the data curation routing logic for distribution to an appropriate location for executing the curation/processing algorithm.

The intermediate unit 220 may have data curation execution logic that is responsible for receiving and executing requests from the data curation scheduling logic to curate/process the sensor data according to the selected curation/processing algorithm. This may require, for example, that a CPU in the intermediate unit 220 instantiates the selected curation/processing algorithm and executes it accordingly. The data curation execution logic may have access to a number of data curation/processing algorithms 240 that are stored locally or available remotely, which the data curation execution logic may selected based on the curation/processing algorithm ID. After the execution is complete, the data curation execution logic may provide the results (e.g., the enriched dataset of curated/processed sensor data) to the curated data lake.

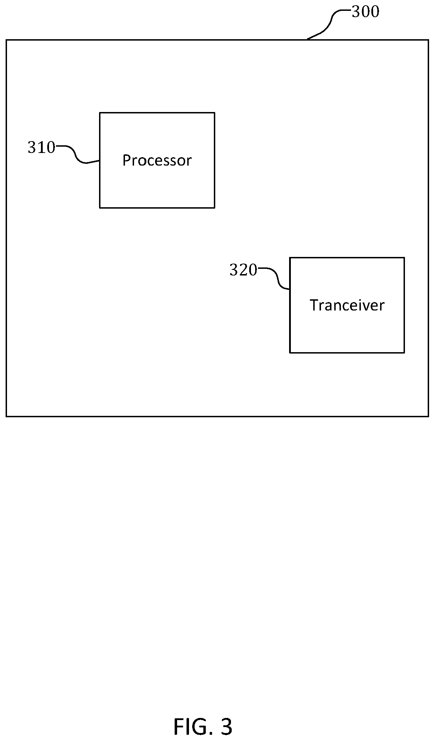

FIG. 3 is a schematic drawing illustrating a device 300 for an adaptive data curation system. The device 300 may include any of the features discussed with respect to the adaptive data curation systems above and any of FIGs. 1-2. FIG. 3 may be implemented as a device, a system, a method, and/or a computer readable medium that, when executed, performs the features of the adaptive data curation systems described above. It should be understood that device 300 is only an example, and other configurations may be possible that include, for example, different components or additional components.

Device 300 includes a processor 300. Processor 310 of device 300 is configured to receive sensor data (e.g. via transceiver 320) about a vehicle, wherein the sensor data is associated with a characteristic label that indicates a collection characteristic about the sensor data. Processor 310 is also configured to determine based on the characteristic label a processing location of a processing device for processing the sensor data, wherein the processing location is associated with a processing capability of processing the sensor data. Processor 310 is also configured to route the sensor data and its characteristic label to the processing device (e.g., via transceiver 320) to process the sensor data with the processing capability into an enriched dataset.

Furthermore, in addition to or in combination with any of the features described in this or the preceding paragraph with respect to device 300, the collection characteristic may include a signature block that indicates a source of the sensor data. Furthermore, in addition to or in combination with any of the features described in this or the preceding paragraph, processor 310 may be further configured to determine a validation of an authenticity of the signature block based on a signature key of the signature block. Furthermore, in addition to or in combination with any of the features described in this or the preceding paragraph, processor 310 may be further configured to disregard the sensor data based on whether the validation fails. Furthermore, in addition to or in combination with any of the features described in this or the preceding paragraph, whether the validation fails may include whether a validation output indicates invalidity of the authenticity of the signature block.

Furthermore, in addition to or in combination with any of the features described in this or the preceding two paragraphs with respect to device 300, processor 310 may be further configured to instruct the vehicle to apply the characteristic label to the sensor data. Furthermore, in addition to or in combination with any of the features described in this or the preceding two paragraphs, the collection characteristic may include at least one of: a physical location of a source of the sensor data, wherein the physical location is of the source at a capture time when the sensor data was captured by the source; a type of the source of the sensor data; a speed of the source of the sensor data, wherein the speed is at the capture time when the sensor data was captured by the source; a light condition in which the sensor data was captured; a weather condition in which the sensor data was captured; and an ambient temperature at the source at the capture time. Furthermore, in addition to or in combination with any of the features described in this or the preceding two paragraphs, the sensor data may be received (e.g., via transceiver 320) from a first sensor and the collection characteristic is based on received data from a second sensor (e.g., via transceiver 320) that is different from the first sensor.

Furthermore, in addition to or in combination with any of the features described in this or the preceding three paragraphs with respect to device 300, processor 310 may be further configured to determine a quality metric for the sensor data based on the collection characteristic. Furthermore, in addition to or in combination with any of the features described in this or the preceding three paragraphs, processor 310 may be further configured to determine the quality metric based on a comparison between the collection characteristic of the sensor data and a second sensor data about the vehicle and an associated collection characteristic of the second sensor data. Furthermore, in addition to or in combination with any of the features described in this or the preceding three paragraphs, processor 310 may be further configured to control movements of the vehicle based on the enriched dataset. Furthermore, in addition to or in combination with any of the features described in this or the preceding three paragraphs, processor 310 may be further configured to store the sensor data with its characteristic label in a data lake.

Furthermore, in addition to or in combination with any of the features described in this or the preceding four paragraphs with respect to device 300, processor 310 may be further configured to store the sensor data with its characteristic label in a data lake only (e.g., via transceiver 320) if a validation of the sensor data indicates an authenticity of the sensor data. Furthermore, in addition to or in combination with any of the features described in this or the preceding four paragraphs, processor may be further configured to determine a validation of the sensor data indicating an authenticity of the sensor data, wherein processor 310 may be further configured to store in a data lake (e.g., via transceiver 320) the sensor data with its characteristic label and the result of the validation of the authenticity. Furthermore, in addition to or in combination with any of the features described in this or the preceding four paragraphs, processor 310 may be configured to store the sensor data in the data lake includes the processor configured to transmit the sensor data with its characteristic label to an external server that hosts the data lake.

Furthermore, in addition to or in combination with any of the features described in this or the preceding five paragraphs, device 300 may be a roadside unit with a communication interface (e.g., transceiver 320), wherein the communication interface may be configured to communicate via a vehicle-to-anything (V2X) communication protocol. Furthermore, in addition to or in combination with any of the features described in this or the preceding five paragraphs, processor 310 may be configured to receive the sensor data from a sensor that is in communication with the processor 310 (e.g., via transceiver 320). Furthermore, in addition to or in combination with any of the features described in this or the preceding five paragraphs, processor 310 may be configured to wirelessly receive the sensor data from a sensor that is external to device 300. Furthermore, in addition to or in combination with any of the features described in this or the preceding five paragraphs, the processing device may include a server external to device 300, where the server is capable of processing the sensor data with the processing capability.

Furthermore, in addition to or in combination with any of the features described in this or the preceding six paragraphs, the processing device may include processor 310, wherein processor 310 may be configured to process the sensor data with the processing capability. Furthermore, in addition to or in combination with any of the features described in this or the preceding six paragraphs, the processing capability may include a computing capability to process the sensor data (e.g., clock speed, instructions per cycle, cores/threads available for processing, memory size, etc.). Furthermore, in addition to or in combination with any of the features described in this or the preceding six paragraphs, processor 310 may be further configured to determine based on the characteristic label a processing algorithm to be used by the processing device to process the sensor data.

Furthermore, in addition to or in combination with any of the features described in this or the preceding seven paragraphs with respect to device 300, processor 310 may be further configured to execute a large language model (LLM) that relates an input including the sensor data and characteristic label to the processing location and/or a processing algorithm that provides the enriched dataset. Furthermore, in addition to or in combination with any of the features described in this or the preceding seven paragraphs, the LLM may include a trained learning model that has been trained with training data to classify the sensor data with the characteristic label that is indicative of the collection characteristic. Furthermore, in addition to or in combination with any of the features described in this or the preceding seven paragraphs, the training data may include sensor data collected from a plurality of different devices over time. Furthermore, in addition to or in combination with any of the features described in this or the preceding seven paragraphs, processor 310 may be further configured to execute a large language model (LLM) on an edge server that is remote to the device, wherein the LLM relates an input including the sensor data and characteristic labels to the processing location and/or a processing algorithm that provides the enriched dataset. Furthermore, in addition to or in combination with any of the features described in this or the preceding seven paragraphs, processor 310 may be configured to update the LLM on the edge server with a propagated large learning model from another edge server that is also remote to the device.

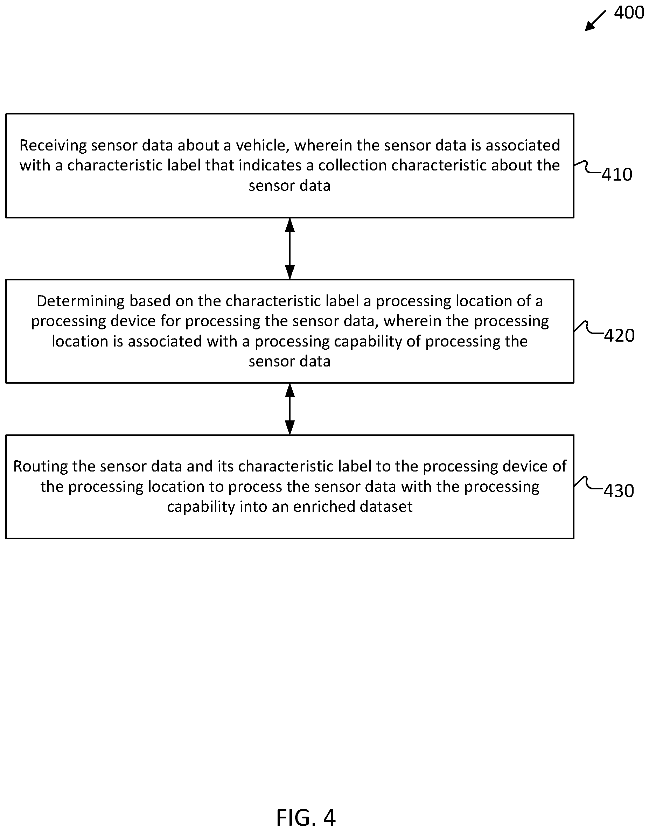

FIG. 4 depicts a schematic flow diagram of a method 400 for adaptive data curation. Method 400 may implement any of the features discussed above with respect to the adaptive data curation systems discussed above and/or FIGs. 1-3. Method 400 includes, in 410, receiving sensor data about a vehicle, wherein the sensor data is associated with a characteristic label that indicates a collection characteristic about the sensor data. Method 400 also includes, in 420, determining based on the characteristic label a processing location of a processing device for processing the sensor data, wherein the processing location is associated with a processing capability of processing the sensor data. Method 400 also includes, in 430, routing the sensor data and its characteristic label to the processing device to process the sensor data with the processing capability into an enriched dataset.

In the following, various examples are provided that may include one or more aspects described with reference to the adaptive data curation systems discussed above and/or any of FIGs. 1-4. The examples provided in relation to the devices may apply also to the described method(s), and vice versa.

Example 1 is a device for adaptive data curation, the device including a processor configured to receive sensor data about a vehicle, wherein the sensor data is associated with a characteristic label that indicates a collection characteristic about the sensor data. The processor is also configured to determine based on the characteristic label a processing location of a processing device for processing the sensor data, wherein the processing location is associated with a processing capability of processing the sensor data. The processor is also configured to route the sensor data and its characteristic label to the processing device of the processing location to process the sensor data with the processing capability into an enriched dataset.

Example 2 is the device of example 1, wherein the collection characteristic includes a signature block that indicates a source of the sensor data.

Example 3 is the device of example 2, wherein the processor is further configured to determine a validation of an authenticity of the signature block based on a signature key of the signature block.

Example 4 is the device of example 3, wherein the processor is further configured to disregard the sensor data based on whether the validation fails.

Example 5 is the device of example 4, wherein whether the validation fails includes whether a validation output indicates invalidity of the authenticity of the signature block.

Example 6 is the device of any one of examples 1 to 5, wherein the processor is further configured to instruct the vehicle to apply the characteristic label to the sensor data.

Example 7 is the device of any one of examples 1 to 6, wherein the collection characteristic includes at least one of: a physical location of a source of the sensor data, wherein the physical location is of the source at a capture time when the sensor data was captured by the source; a type of the source of the sensor data; a speed of the source of the sensor data, wherein the speed is at the capture time when the sensor data was captured by the source; a light condition in which the sensor data was captured; a weather condition in which the sensor data was captured; and an ambient temperature at the source at the capture time.

Example 8 is the device of example 7, wherein the sensor data is received from a first sensor and the collection characteristic is based on received data from a second sensor that is different from the first sensor.

Example 9 is the device of any one of examples 1 to 8, wherein the processor is further configured to determine a quality metric for the sensor data based on the collection characteristic.

Example 10 is the device of example 9, wherein the processor is further configured to determine the quality metric based on a comparison between the collection characteristic of the sensor data and a second sensor data about the vehicle and an associated collection characteristic of the second sensor data.

Example 11 is the device of any one of examples 1 to 10, wherein the processor is further configured to control movements of the vehicle based on the enriched dataset.

Example 12 is the device of any one of examples 1 to 11, wherein the processor is further configured to store the sensor data with its characteristic label in a data lake.

Example 13 is the device of any one of examples 1 to 12, wherein the processor is further configured to store the sensor data with its characteristic label in a data lake only if a validation of the sensor data indicates an authenticity of the sensor data.

Example 14 is the device of any one of examples 1 to 13, wherein the processor is further configured to determine a validation of the sensor data indicating an authenticity of the sensor data, wherein the processor is further configured to store in a data lake the sensor data with its characteristic label and the result of the validation of the authenticity.

Example 15 is the device of any one of examples 1 to 14, wherein the processor configured to store the sensor data in the data lake includes the processor configured to transmit the sensor data with its characteristic label to an external server that hosts the data lake.

Example 16 is the device of any one of examples 1 to 15, wherein the device includes a roadside unit with a communication interface wherein the communication interface is configured to communicate via a vehicle-to-anything (V2X) communication protocol.

Example 17 is the device of any one of examples 1 to 16, wherein the device further includes a sensor in communication with the processor, wherein the processor is configured to receive the sensor data from the processor.

Example 18 is the device of any one of examples 1 to 17, wherein the processor is configured to wirelessly receive the sensor data from a sensor that is external to the device.

Example 19 is the device of any one of examples 1 to 18, wherein the processing device includes a server external to the device that is capable of processing the sensor data with the processing capability.

Example 20 is the device of any one of examples 1 to 19, wherein the processing device includes the processor of the device, wherein the processor is configured to process the sensor data with the processing capability.

Example 21 is the device of any one of examples 1 to 20, the processing capability includes a computing capability to process the sensor data (e.g., clock speed, instructions per cycle, cores/threads available for processing, memory size, etc.).

Example 22 is the device of any one of examples 1 to 21, wherein the processor is further configured to determine based on the characteristic label a processing algorithm to be used by the processing device to process the sensor data.

Example 23 is the device of any one of examples 1 to 22, wherein the processor is further configured to execute a large language model (LLM) that relates an input including the sensor data and characteristic label to the processing location and/or a processing algorithm that provides the enriched dataset.

Example 24 is the device of example 23, wherein the LLM includes a trained learning model that has been trained with training data to classify the sensor data with the characteristic label that is indicative of the collection characteristic.

Example 25 is the device of example 24, wherein the training data includes sensor data collected from a plurality of different devices over time.

Example 26 is the device of any one of examples 1 to 25, wherein the processor is further configured to execute a large language model (LLM) on an edge server that is remote to the device, wherein the LLM relates an input including the sensor data and characteristic labels of the processing location and/or a processing algorithm that provides the enriched dataset.

Example 27 is the device of example 26, wherein the processor is configured to update the LLM on the edge server with a propagated large learning model from an other edge server that is also remote to the device.

Example 28 is a method for adaptive data curation, the method including receiving sensor data about a vehicle, wherein the sensor data is associated with a characteristic label that indicates a collection characteristic about the sensor data. The method also includes determining based on the characteristic label a processing location of a processing device for processing the sensor data, wherein the processing device is associated with a processing capability of processing the sensor data. The method also includes routing the sensor data and its characteristic label to the processing device of the processing location to process the sensor data with the processing capability into an enriched dataset.

Example 29 is the method of example 28, wherein the collection characteristic includes a signature block that indicates a source of the sensor data.

Example 30 is the method of example 29, wherein the method further includes determining a validation of an authenticity of the signature block based on a signature key of the signature block.

Example 31 is the method of example 30, wherein the method further includes disregarding the sensor data based on whether the validation fails.

Example 32 is the method of example 31, wherein whether the validation fails includes whether a validation output indicates invalidity of the authenticity of the signature block.

Example 33 is the method of any one of examples 28 to 32, wherein the method further includes instructing the vehicle to apply the characteristic label to the sensor data.

Example 34 is the method of any one of examples 28 to 33, wherein the collection characteristic includes at least one of: a physical location of a source of the sensor data, wherein the physical location is of the source at a capture time when the sensor data was captured by the source; a type of the source of the sensor data; a speed of the source of the sensor data, wherein the speed is at the capture time when the sensor data was captured by the source; a light condition in which the sensor data was captured; a weather condition in which the sensor data was captured; and an ambient temperature at the source at the capture time.

Example 35 is the method of example 34, the method further including receiving the sensor data from a first sensor and the collection characteristic is based on received data from a second sensor that is different from the first sensor.

Example 36 is the method of any one of examples 28 to 35, wherein the method further includes determining a quality metric for the sensor data based on the collection characteristic.

Example 37 is the method of example 36, wherein the method further includes determining the quality metric based on a comparison between the collection characteristic of the sensor data and a second sensor data about the vehicle and an associated collection characteristic of the second sensor data.

Example 38 is the method of any one of examples 28 to 37, wherein the method further includes controlling movements of the vehicle based on the enriched dataset.

Example 39 is the method of any one of examples 28 to 38, wherein the method further includes storing the sensor data with its characteristic label in a data lake.

Example 40 is the method of any one of examples 28 to 39, wherein the method further includes storing the sensor data with its characteristic label in a data lake only if a validation of the sensor data indicates an authenticity of the sensor data.

Example 41 is the method of any one of examples 28 to 40, wherein the method further includes determining a validation of the sensor data indicating an authenticity of the sensor data, wherein the method further includes storing in a data lake the sensor data with its characteristic label and the result of the validation of the authenticity.

Example 42 is the method of any one of examples 28 to 41, wherein the storing the sensor data in the data lake includes transmitting the sensor data with its characteristic label to an external server that hosts the data lake.

Example 43 is the method of any one of examples 28 to 42, wherein the method includes communicating via a vehicle-to-anything (V2X) communication protocol (e.g. using a communication interface) between a roadside unit and a source of the sensor data.

Example 44 is the method of any one of examples 28 to 43, wherein the method further includes receiving the sensor data from a sensor.

Example 45 is the method of any one of examples 28 to 44, wherein the method further includes wirelessly receiving the sensor data from a sensor.

Example 46 is the method of any one of examples 28 to 45, wherein the method includes processing the sensor data with the processing capability on a server that is external to a source of the sensor data.

Example 47 is the method of any one of examples 28 to 46, wherein the processing capability includes a computing capability to process the sensor data (e.g., clock speed, instructions per cycle, cores/threads available for processing, memory size, etc.).

Example 48 is the method of any one of examples 28 to 47, wherein the method further includes determining based on the characteristic label a processing algorithm to be used by the processing device to process the sensor data.

Example 49 is the method of any one of examples 28 to 48, wherein the method further includes executing a large language model (LLM) that relates an input including the sensor data and characteristic label to the processing location and/or a processing algorithm that provides the enriched dataset.

Example 50 is the method of example 49, wherein the LLM includes a trained learning model that has been trained with training data to classify the sensor data with the characteristic label that is indicative of the collection characteristic.

Example 51 is the method of example 50, wherein the training data includes sensor data collected from a plurality of different devices over time.

Example 52 is the method of any one of examples 28 to 51, wherein the method further includes executing a large language model (LLM) on an edge server, wherein the LLM relates an input including the sensor data and characteristic labels to the processing location and/or a processing algorithm that provides the enriched dataset.

Example 53 is the method of example 52, wherein the method further includes updating the LLM on the edge server with a propagated large learning model from an other edge server that is different from the edge server.

Example 54 is an apparatus for adaptive data curation, the apparatus includes a means for receiving sensor data about a vehicle, wherein the sensor data is associated with a characteristic label that indicates a collection characteristic about the sensor data. The apparatus also includes a means for determining based on the characteristic label a processing location of a processing device for processing the sensor data, wherein the processing location is associated with a processing capability of processing the sensor data. The apparatus also includes a means for routing the sensor data and its characteristic label to the processing device of the processing location to process the sensor data with the processing capability into an enriched dataset.

Example 55 is the apparatus of example 54, wherein the collection characteristic includes a signature block that indicates a source of the sensor data.

Example 56 is the apparatus of example 55, wherein the apparatus further includes a means for determining a validation of an authenticity of the signature block based on a signature key of the signature block.

Example 57 is the apparatus of example 56, wherein the apparatus further includes a means for disregarding the sensor data based on whether the validation fails.

Example 58 is the apparatus of example 57, wherein whether the validation fails includes whether a validation output indicates invalidity of the authenticity of the signature block.

Example 59 is the apparatus of any one of examples 54 to 58, wherein the apparatus further includes instructing the vehicle to apply the characteristic label to the sensor data.

Example 60 is the apparatus of any one of examples 54 to 59, wherein the collection characteristic includes at least one of: a physical location of a source of the sensor data, wherein the physical location is of the source at a capture time when the sensor data was captured by the source; a type of the source of the sensor data; a speed of the source of the sensor data, wherein the speed is at the capture time when the sensor data was captured by the source; a light condition in which the sensor data was captured; a weather condition in which the sensor data was captured; and an ambient temperature at the source at the capture time.

Example 61 is the apparatus of example 60, the apparatus further including a means for receiving the sensor data from a first sensor and the collection characteristic is based on received data from a second sensor that is different from the first sensor.

Example 62 is the apparatus of any one of examples 54 to 61, wherein the apparatus further includes a means for determining a quality metric for the sensor data based on the collection characteristic.

Example 63 is the apparatus of example 62, wherein the apparatus further includes a means for determining the quality metric based on a comparison between the collection characteristic of the sensor data and a second sensor data about the vehicle and an associated collection characteristic of the second sensor data.

Example 64 is the apparatus of any one of examples 54 to 63, wherein the apparatus further includes a means for controlling movements of the vehicle based on the enriched dataset.

Example 65 is the apparatus of any one of examples 54 to 64, wherein the apparatus further includes a means for storing the sensor data with its characteristic label in a data lake.

Example 66 is the apparatus of any one of examples 54 to 65, wherein the apparatus further includes a means for storing the sensor data with its characteristic label in a data lake only if a validation of the sensor data indicates an authenticity of the sensor data.

Example 67 is the apparatus of any one of examples 54 to 66, wherein the apparatus further includes a means for determining a validation of the sensor data indicating an authenticity of the sensor data, wherein the apparatus further includes a means for storing in a data lake the sensor data with its characteristic label and the result of the validation of the authenticity.

Example 68 is the apparatus of any one of examples 54 to 67, wherein the means for storing the sensor data in the data lake includes a means for transmitting the sensor data with its characteristic label to an external server that hosts the data lake.

Example 69 is the apparatus of any one of examples 54 to 68, wherein the apparatus includes a means for communicating via a vehicle-to-anything (V2X) communication protocol (e.g. a communication interface) between a roadside unit and a source of the sensor data.

Example 70 is the apparatus of any one of examples 54 to 69, wherein the apparatus further includes a means for receiving (e.g. a receiver/transceiver) the sensor data from a sensor.

Example 71 is the apparatus of any one of examples 54 to 70, wherein the apparatus further includes a means for wirelessly receiving the sensor data from a sensor.

Example 72 is the apparatus of any one of examples 54 to 71, wherein the apparatus includes a means for processing the sensor data with the processing capability on a server that is external to a source of the sensor data.

Example 73 is the apparatus of any one of examples 54 to 72, wherein the processing capability includes a computing capability to process the sensor data (e.g., clock speed, instructions per cycle, cores/threads available for processing, memory size, etc.).

Example 74 is the apparatus of any one of examples 54 to 73, wherein the apparatus further includes a means for determining based on the characteristic label a processing algorithm to be used by the processing device to process the sensor data.

Example 75 is the apparatus of any one of examples 54 to 74, wherein the apparatus further includes a means for executing a large language model (LLM) that relates an input including the sensor data and characteristic label to the processing location and/or a processing algorithm that provides the enriched dataset.

Example 76 is the apparatus of example 75, wherein the LLM includes a trained learning model that has been trained with training data to classify the sensor data with the characteristic label that is indicative of the collection characteristic.

Example 77 is the apparatus of example 76, wherein the training data includes sensor data collected from a plurality of different devices over time.

Example 78 is the apparatus of any one of examples 54 to 77, wherein the apparatus further includes a means for executing a large language model (LLM) on an edge server, wherein the LLM relates an input including the sensor data and characteristic labels to the processing location and/or a processing algorithm that provides the enriched dataset.

Example 79 is the apparatus of example 78, wherein the apparatus further includes a means for updating the LLM on the edge server with a propagated large learning model from an other edge server that is different from the edge server.

Example 80 is a non-transitory, computer-readable medium including instructions that, when executed, cause one or more processors to receive sensor data about a vehicle, wherein the sensor data is associated with a characteristic label that indicates a collection characteristic about the sensor data. The instructions also cause the one or more processors to determine based on the characteristic label a processing location of a processing device for processing the sensor data, wherein the processing location is associated with a processing capability of processing the sensor data. The instructions also cause the one or more processors to route the sensor data and its characteristic label to the processing device of the processing location to process the sensor data with the processing capability into an enriched dataset.

Example 81 is the non-transitory, computer-readable medium of example 80, wherein the collection characteristic includes a signature block that indicates a source of the sensor data.

Example 82 is the non-transitory, computer-readable medium of example 81, wherein the instructions further cause the one or more processors to determine a validation of an authenticity of the signature block based on a signature key of the signature block.

Example 83 is the non-transitory, computer-readable medium of example 82, wherein the instructions further cause the one or more processors to disregard the sensor data based on whether the validation fails.

Example 84 is the non-transitory, computer-readable medium of example 83, wherein whether the validation fails includes whether a validation output indicates invalidity of the authenticity of the signature block.

Example 85 is the non-transitory, computer-readable medium of any one of examples 80 to 84, wherein the instructions further cause the one or more processors to instruct the vehicle to apply the characteristic label to the sensor data.

Example 86 is the non-transitory, computer-readable medium of any one of examples 80 to 85, wherein the collection characteristic includes at least one of: a physical location of a source of the sensor data, wherein the physical location is of the source at a capture time when the sensor data was captured by the source; a type of the source of the sensor data; a speed of the source of the sensor data, wherein the speed is at the capture time when the sensor data was captured by the source; a light condition in which the sensor data was captured; a weather condition in which the sensor data was captured; and an ambient temperature at the source at the capture time.

Example 87 is the non-transitory, computer-readable medium of example 86, wherein the sensor data is received from a first sensor and the collection characteristic is based on received data from a second sensor that is different from the first sensor.

Example 88 is the non-transitory, computer-readable medium of any one of examples 80 to 87, wherein the instructions further cause the one or more processors to determine a quality metric for the sensor data based on the collection characteristic.

Example 89 is the non-transitory, computer-readable medium of example 88, wherein the instructions further cause the one or more processors to determine the quality metric based on a comparison between the collection characteristic of the sensor data and a second sensor data about the vehicle and an associated collection characteristic of the second sensor data.

Example 90 is the non-transitory, computer-readable medium of any one of examples 80 to 89, wherein the instructions further cause the one or more processors to control movements of the vehicle based on the enriched dataset.

Example 91 is the non-transitory, computer-readable medium of any one of examples 80 to 90, wherein the instructions further cause the one or more processors to store the sensor data with its characteristic label in a data lake.

Example 92 is the non-transitory, computer-readable medium of any one of examples 80 to 91, wherein the instructions further cause the one or more processors to store the sensor data with its characteristic label in a data lake only if a validation of the sensor data indicates an authenticity of the sensor data.

Example 93 is the non-transitory, computer-readable medium of any one of examples 80 to 92, wherein the instructions further cause the one or more processors to determine a validation of the sensor data indicating an authenticity of the sensor data, wherein the instructions further cause the one or more processors to store in a data lake the sensor data with its characteristic label and the result of the validation of the authenticity.

Example 94 is the non-transitory, computer-readable medium of any one of examples 80 to 93, wherein the instructions that cause the one or more processors to store the sensor data in the data lake includes instructions that cause the one or more processors to transmit the sensor data with its characteristic label to an external server that hosts the data lake.

Example 95 is the non-transitory, computer-readable medium of any one of examples 80 to 94, wherein the instructions further cause the one or more processors to communicate via a vehicle-to-anything (V2X) communication protocol (e.g., with a communication interface) between a roadside unit and a source of the sensor data.

Example 96 is the non-transitory, computer-readable medium of any one of examples 80 to 95, wherein the instructions further cause the one or more processors to receive the sensor data from a sensor.

Example 97 is the non-transitory, computer-readable medium of any one of examples 80 to 96, wherein the processing device includes a server that is capable of processing the sensor data with the processing capability.

Example 98 is the non-transitory, computer-readable medium of any one of examples 80 to 97, wherein the processing device includes the one or more processors, wherein the instructions further cause the one or more processors to process the sensor data with the processing capability.

Example 99 is the non-transitory, computer-readable medium of any one of examples 80 to 98, the processing capability includes a computing capability to process the sensor data (e.g., clock speed, instructions per cycle, cores/threads available for processing, memory size, etc.).

Example 100 is the non-transitory, computer-readable medium of any one of examples 80 to 99, wherein the instructions further cause the one or more processors to determine based on the characteristic label a processing algorithm to be used by the processing device to process the sensor data.

Example 101 is the non-transitory, computer-readable medium of any one of examples 80 to 100, wherein the instructions further cause the one or more processors to execute a large language model (LLM) that relates an input including the sensor data and characteristic label to the processing location and/or a processing algorithm that provides the enriched dataset.

Example 102 is the non-transitory, computer-readable medium of example 101, wherein the LLM includes a trained learning model that has been trained with training data to classify the sensor data with the characteristic label that is indicative of the collection characteristic.

Example 103 is the non-transitory, computer-readable medium of example 102, wherein the training data includes sensor data collected from a plurality of different devices over time.

Example 104 is the non-transitory, computer-readable medium of any one of examples 80 to 103, wherein the instructions further cause the one or more processors to execute a large language model (LLM) on an edge server, wherein the LLM relates an input including the sensor data and characteristic labels to the processing location and/or a processing algorithm that provides the enriched dataset.

Example 105 is the non-transitory, computer-readable medium of example 104, wherein the instructions further cause the one or more processors to update the LLM on the edge server with a propagated large learning model from an other edge server.

While the disclosure has been particularly shown and described with reference to specific aspects, it should be understood by those skilled in the art that various changes in form and detail may be made therein without departing from the spirit and scope of the disclosure as defined by the appended claims. The scope of the disclosure is thus indicated by the appended claims and all changes, which come within the meaning and range of equivalency of the claims, are therefore intended to be embraced.

## Claims

1. A device for adaptive data curation, the device comprising a processor configured to:
receive sensor data about a vehicle, wherein the sensor data is associated with a characteristic label that indicates a collection characteristic about the sensor data;
determine based on the characteristic label a processing location of a processing device for processing the sensor data, wherein the processing location is associated with a processing capability of processing the sensor data; and
route the sensor data and its characteristic label to the processing device of the processing location to process the sensor data with the processing capability into an enriched dataset.

2. The device of claim 1, wherein the collection characteristic comprises a signature block that indicates a source of the sensor data, wherein the processor is further configured to determine a validation of an authenticity of the signature block based on a signature key of the signature block.

3. The device of claim 2, wherein the processor is further configured to disregard the sensor data based on whether the validation fails, wherein whether the validation fails comprises whether a validation output indicates invalidity of the authenticity of the signature block.

4. The device of any one of claims 1 to 3, wherein the collection characteristic comprises at least one of: a physical location of a source of the sensor data, wherein the physical location is of the source at a capture time when the sensor data was captured by the source; a type of the source of the sensor data; a speed of the source of the sensor data, wherein the speed is at the capture time when the sensor data was captured by the source; a light condition in which the sensor data was captured; a weather condition in which the sensor data was captured; and an ambient temperature at the source at the capture time.

5. The device of any one of claims 1 to 4, wherein the processor is further configured to determine a quality metric for the sensor data based on a comparison between the collection characteristic of the sensor data and a second sensor data about the vehicle and an associated collection characteristic of the second sensor data.

6. The device of any one of claims 1 to 5, wherein the processor is further configured to store the sensor data with its characteristic label in a data lake or to transmit the sensor data with its characteristic label to an external server that hosts the data lake.

7. The device of any one of claims 1 to 6, wherein the device comprises a roadside unit with a communication interface configured to communicate via a vehicle-to-anything communication protocol.

8. The device of any one of claims 1 to 7, wherein the processing device comprises a server external to the device that is capable of processing the sensor data with the processing capability.

9. The device of any one of claims 1 to 8, the processing capability comprises a computing capability to process the sensor data, wherein the computing capability includes at least one of a clock speed, a number of instructions per cycle, a number of cores available for processing, a number of cores available for processing, or a memory size.

10. The device of any one of claims 1 to 9, wherein the processor is further configured to determine based on the characteristic label a processing algorithm to be used by the processing device to process the sensor data.

11. The device of any one of claims 1 to 10, wherein the processor is further configured to execute a large language model on an edge server that is remote to the device, wherein the large language model relates an input comprising the sensor data and characteristic labels to the processing location or a processing algorithm that provides the enriched dataset.

12. A non-transitory, computer-readable medium comprising instructions that, when executed, cause one or more processors to:
receive sensor data about a vehicle, wherein the sensor data is associated with a characteristic label that indicates a collection characteristic about the sensor data;
determine based on the characteristic label a processing location of a processing device for processing the sensor data, wherein the processing location is associated with a processing capability of processing the sensor data; and
route the sensor data and its characteristic label to the processing device to process the sensor data with the processing capability into an enriched dataset.

13. The non-transitory, computer-readable medium of claim 12, wherein the collection characteristic comprises a signature block that indicates a source of the sensor data, wherein the processor is further configured to determine a validation of an authenticity of the signature block based on a signature key of the signature block.

14. The non-transitory, computer-readable medium of claim 13, wherein the processor is further configured to disregard the sensor data based on whether the validation fails, wherein whether the validation fails comprises whether a validation output indicates invalidity of the authenticity of the signature block.

15. The non-transitory, computer-readable medium of any one of claims 12 to 14, wherein the processor is further configured to determine a quality metric for the sensor data based on a comparison between the collection characteristic of the sensor data and a second sensor data about the vehicle and an associated collection characteristic of the second sensor data.
